Europäisches Patentamt

European Patent Office

Office européen des brevets

(11) Numéro de publication: **0 399 323**
**A1**

## (12) DEMANDE DE BREVET EUROPEEN

(21) Numéro de dépôt: **90109014.2**

(22) Date de dépôt: **14.05.90**

(51) Int. Cl.5: **F16N 29/02, F16N 7/38, F16C 33/66, F16C 19/52**

(30) Priorité: **22.05.89 FR 8906637**

(43) Date de publication de la demande:
**28.11.90 Bulletin 90/48**

(84) Etats contractants désignés:
**AT BE CH DE DK ES FR GB GR IT LI LU NL SE**

(71) Demandeur: **ALCATEL CIT**
**12 Rue de la Baume**
**F-75008 Paris(FR)**

(72) Inventeur: **Long, Jacques**
**16, rue de la Pointe Percée**
**F-74000 Annecy(FR)**
Inventeur: **Perrillat-Amede, Denis**
**31, Avenue des Carrés**
**F-74940 Annecy-Le-Vieux(FR)**

(74) Mandataire: **Weinmiller, Jürgen et al**
**Lennéstrasse 9 Postfach 24**
**D-8133 Feldafing(DE)**

(54) **Dispositif pour l'alimentation en graisse de plusieurs paliers.**

(57) Dispositif pour l'alimentation en graisse de paliers (4, 5) d'une machine tournante (1) comportant un stator (2) et un rotor (3), comprenant des moyens (12, 10, 11) pour l'injection de graisse dans lesdits paliers, lesdits moyens étant commandés par un circuit électronique (17) de commande recevant en entrée des signaux en provenance de capteurs (18 à 21) de paramètres caractéristiques de l'état de fonctionnement des paliers, caractérisé en ce que lesdits moyens comprennent un réservoir (12) de graisse sous pression relié à des blocs d'injection (10, 11) reliés, chacun, à un canal d'alimentation (6, 7) d'un palier, lesdits capteurs étant des capteurs de pression et de température, et ledit circuit électronique (17) comportant une horloge et élaborant, en fonction d'un programme préétabli, les cycles d'injection compte tenu des informations données par lesdits capteurs et du temps de fonctionnement des paliers.

FIG.1

## Dispositif pour l'alimentation en graisse de plusieurs paliers

La présente invention concerne un dispositif pour l'alimentation en graisse de plusieurs paliers.

L'invention s'applique dans tous les cas où l'on désire graisser les paliers automatiquement pendant la rotation de la machine et indépendamment les uns des autres. C'est le cas lorsque les conditions de fonctionnement des paliers d'une machine diffèrent suivant leur emplacement, un palier pouvant, par exemple, être situé plus près d'une source de dissipation d'énergie calorifique qu'un autre.

Ainsi, l'invention s'applique en particulier pour le graissage automatique et indépendant des paliers d'une pompe à vide turbomoléculaire.

On connaît par le brevet des Etats Unis n° 4 738 336 un système automatique d'alimentation en huile de paliers à billes. Il comprend un capteur photo-voltaïque permettant de déterminer le rapport de vitesse de rotation de la cage des paliers à billes par rapport à la vitesse de rotation de l'arbre. En fonction de cette information, un système de commande 54 élabore un cycle d'injection et commande une pompe.

Cependant, ce système ne permet pas d'alimenter les paliers en fonction de leur réel besoin en graisse.

L'invention propose un dispositif qui permet d'alimenter les paliers en fonction de leur besoin réel en graisse et d'une manière parfaitement calibrée.

L'invention a ainsi pour objet dispositif pour l'alimentation en graisse de paliers d'une machine tournante comportant un stator et un rotor, comprenant des moyens pour l'injection de graisse dans lesdits paliers, lesdits moyens étant commandés par un circuit électronique de commande recevant en entrée des signaux en provenance de capteurs de paramètres caractéristiques de l'état de fonctionnement des paliers, caractérisé en ce que lesdits moyens comprennent un réservoir de graisse sous pression relié à des blocs d'injection reliés, chacun, à un canal d'alimentation d'un palier, lesdits capteurs étant des capteurs de pression et de température, et ledit circuit électronique comportant une horloge et élaborant, en fonction d'un programme préétabli, les cycles d'injection compte tenu des informations données par lesdits capteurs et du temps de fonctionnement des paliers.

Selon une autre caractéristique, un dit bloc d'injection comporte un orifice d'entrée, relié audit réservoir de graisse, et un orifice de sortie, relié au canal d'alimentation d'un palier, l'orifice d'entrée et l'orifice de sortie étant reliés par des canaux internes, ledit bloc étant muni d'une vanne à deux positions dont une première position laisse libre ladite entrée et obture ladite sortie et dont une seconde position obture ladite entrée et laisse libre ladite sortie, et d'un piston d'injection déplaçable entre une première position dans laquelle ce piston est dégagé de toute obstruction desdits canaux internes entre l'orifice d'entrée et l'orifice de sortie et une seconde position dans laquelle ledit piston pénètre dans au moins une partie desdits canaux.

Avantageusement, ladite vanne et ledit piston d'injection sont actionnés chacun par un électro-aimant commandé par ledit circuit électronique.

Selon une autre caractéristique, chaque canal d'alimentation aboutit à une portée rotorique cylindrique, filetée, immédiatement contiguë à un palier.

On va maintenant donner la description d'un exemple particulier de mise en oeuvre de l'invention en se référant au dessin annexé dans lequel :

La figure 1 représente une vue schématique générale de l'invention.

Les figures 2 à 5 représentent, dans quatre états consécutifs, un bloc d'injection particulier, relié à un réservoir de graisse sous pression.

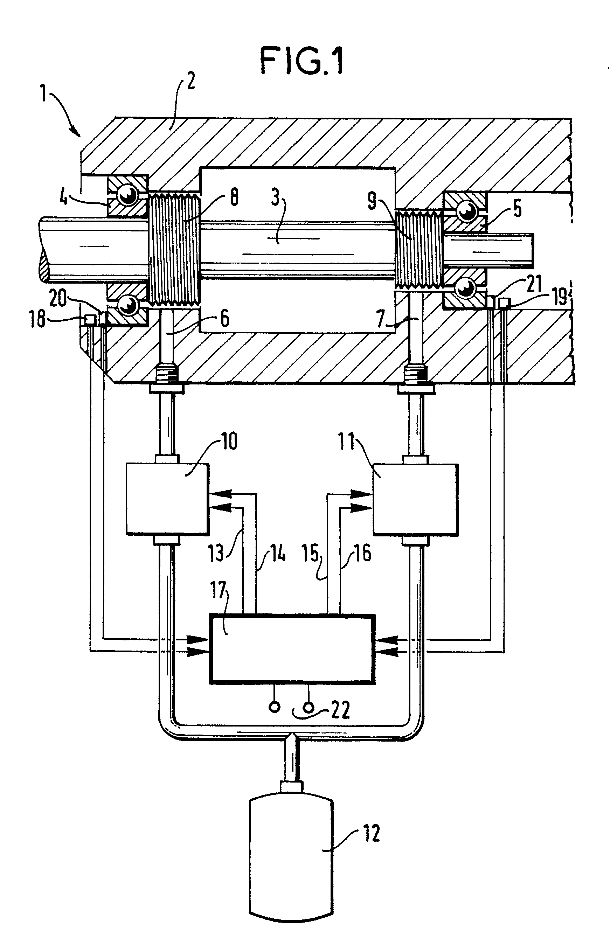

En se référant à la figure 1, on voit, représentée partiellement, une machine tournante 1 qui peut être, par exemple, une pompe à vide à grande vitesse de rotation, turbomoléculaire ou d'un autre type comportant un stator 2 et un rotor non représenté solidaire d'un arbre 3 supporté dans le stator 2 par deux paliers 4 et 5 à roulements à billes.

Pour chaque palier, le stator est percé d'un canal d'alimentation en graisse : 6 pour le palier 4 et 7 pour le palier 5.

Les canaux d'alimentation 6 et 7 aboutissent chacun à une portée cylindrique filetée, respectivement 8 et 9, de l'arbre rotatif 3. Ces portées sont immédiatement contiguës aux paliers 4 et 5. Ainsi, lors de la rotation du rotor et de l'arbre 3, la graisse, injectée dans les canaux d'alimentation 6 et 7 est conduite axialement vers les paliers à billes 4 et 5 par les portées filetées 8 et 9 qui agissent comme des pompes à vis et distribuent la graisse selon une couronne circulaire réalisant ainsi un graissage homogène des paliers sur tout leur pourtour.

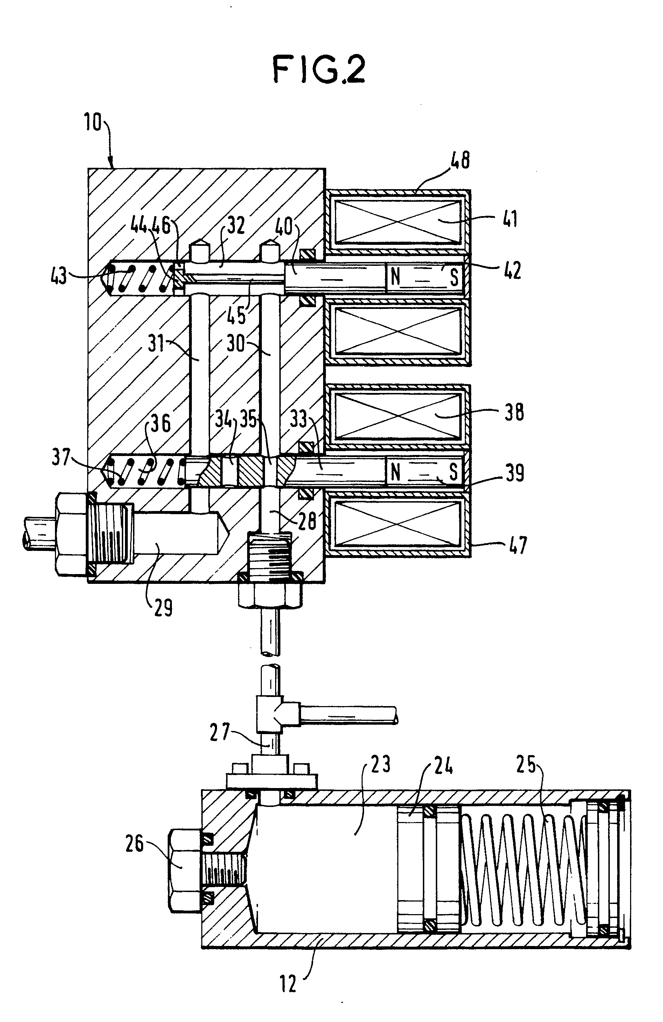

Chaque canal d'alimentation en graisse 6 (7) est relié à un bloc d'injection 10 (11) pour injecter un volume calibré de graisse dans ce canal d'alimentation. Un exemple particulier de ce bloc d'injection 10 (11) est décrit en référence aux figures 2 à 5.

Un réservoir de graisse 12, sous pression, est relié aux blocs d'injection 10 et 11. Ce réservoir 12 est également décrit en référence aux figures 2 à 5.

Les blocs d'injection 10 et 11 sont commandés par des signaux de commande envoyés sur les sorties 13 à 16 d'un circuit électronique 17 qui élabore des cycles d'injection pour chaque palier. Des capteurs de pression 18 et 19 et de température 20 et 21 situés à proximité des paliers 4 et 5 reliés au circuit électronique 17. A partir des données fournies par ces capteurs et du temps de fonctionnement de chaque palier, le circuit électronique 17, qui comporte une horloge, élabore, en fonction d'un programme préétabli, les cycles d'injection pour chaque palier et fournit les ordres de commande correspondant sur les sorties 13 à 16. Ainsi, le graissage des paliers est assuré pendant la rotation de la machine, indépendamment l'un de l'autre et en fonction de leur besoin, déterminé selon leurs conditions de fonctionnement en pression, température et durée de fonctionnement.

Le circuit électronique 17 est alimenté extérieurement en 22.

On va maintenant décrire, en se référant aux figures 2 à 5 un exemple particulier du réservoir 12 et d'un bloc d'injection 10, les deux blocs 10 et 11 étant identiques.

Le réservoir 12 est une simple capacité remplie sous vide de graisse 23 qui est mise sous pression par un piston 24 poussé par un ressort 25. Le réservoir est percé d'un orifice, bouché par un bouchon 26, par lequel on peut approvisionner le réservoir en graisse. Le volume de ce réservoir est adapté au nombre de lubrifications souhaitées.

Le réservoir 12 est relié par une conduite 27 étanche au vide, souple ou rigide, à chacun des blocs d'injection 10 et 11. Un seul de ces blocs d'injection est représenté sur ces figures.

Chaque bloc d'injection comprend un orifice d'entrée 28, relié au réservoir 12 et un orifice de sortie 29 relié au canal d'alimentation 6 du palier 4.

Ces orifices d'entrée 28 et de sortie 29, sont reliés par des canaux internes 30, 31 et 32.

Les canaux 30 et 31 sont parallèles.

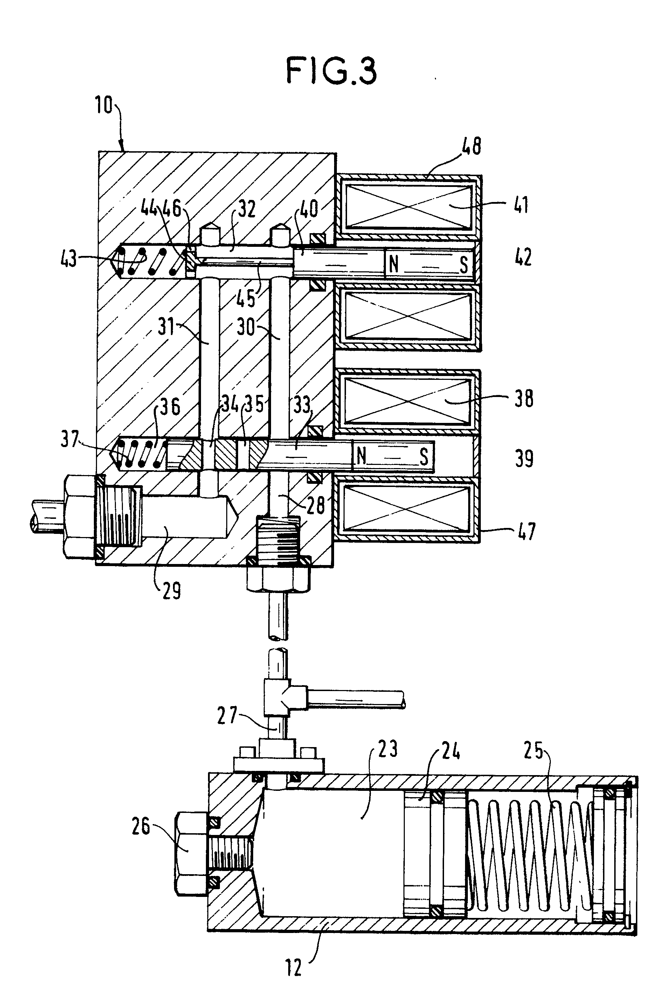

Le canal 30 poursuit l'orifice d'entrée 28 et le canal 31 aboutit à l'orifice de sortie 29. A l'opposé des orifices d'entrée 28 et de sortie 29, les canaux 30 et 31 sont reliés par le canal 32 qui constitue un canal transversal. Le bloc d'injection est muni d'une vanne 33. Cette vanne 33 est cylindrique et porte deux passages 34 et 35 et elle est logée dans un trou cylindrique 36 du bloc d'injection qui traverse les canaux 30 et 31. Dans ce trou 36, la vanne 33 peut prendre deux positions. Dans une première position, qui est celle de la figure 2, le passage 35 coïncide avec le canal 30 et l'orifice d'entrée 28 est donc ouvert, tandis que l'orifice de sortie 29 est obturé, et dans une seconde position (figure 3), le passage 34 coïncide avec le canal 31 et l'orifice de sortie 29 est donc ouvert tandis que l'orifice d'entrée 28 est obturé. Un ressort de rappel 37 pousse la vanne 33 dans la position de la figure 2. La vanne 33 est actionnée en sens inverse par un électro-aimant comportant un bobinage 38 et un noyau 39 solidaire de la vanne 33. Pour obtenir une plus grande force, le noyau 39 est un aimant.

Le bloc d'injection 10 est muni en outre d'un piston d'injection 40 logé dans le canal transversal 32 qui se prolonge de part et d'autre des canaux 30 et 31.

Ce piston d'injection est également commandé par un électro-aimant comportant un bobinage 41 et un noyau aimanté 42. Il est muni en outre d'un ressort de rappel 43 qui prend appui sur une portée 44 reliée au piston 40 par une tige 45, ceci afin d'éviter d'avoir un ressort trop long. Bien entendu, la portée 44 est percée de trous 46 de façon à ce que le piston 40 puisse comprimer la graisse et l'obliger à descendre dans le canal 31.

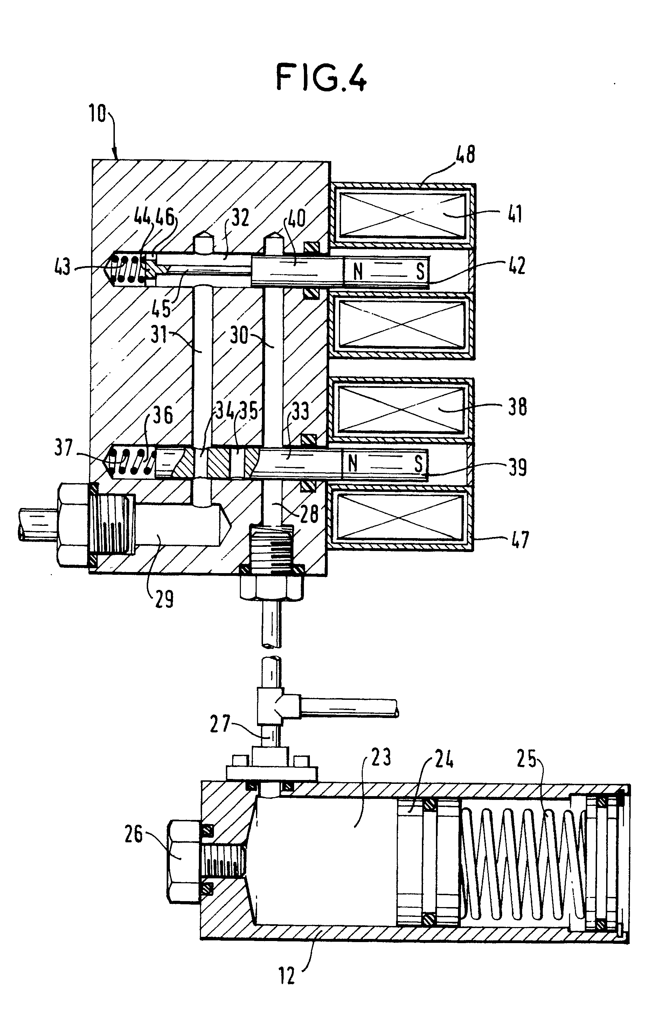

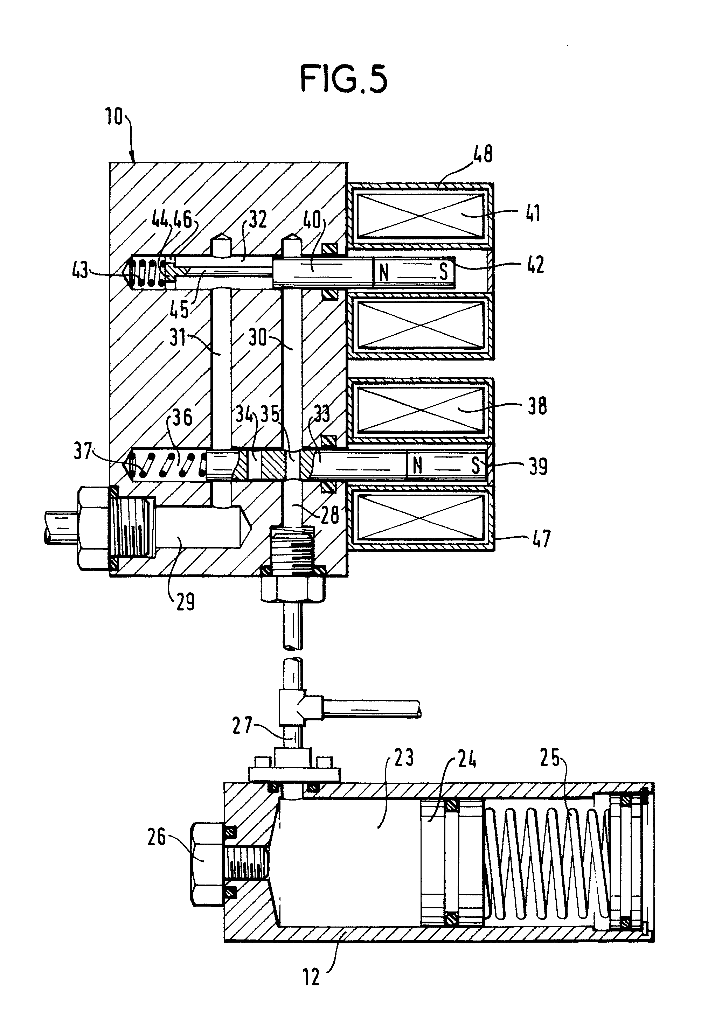

Dans une première position, telle que représentée sur les figures 2 et 3, le piston injecteur 40 est dégagé du canal transversal 32 permettant à la graisse de s'y introduire et dans une seconde position telle que représentée sur les figures 4 et 5, le piston 40 pénètre dans le canal transversal 32 repoussant ainsi la graisse vers le canal 31.

Pour un meilleur rendement, les bobinages 38 et 41 comportent un circuit magnétique 47, 48.

Le cycle de fonctionnement est le suivant :

Dans la position représentée figure 2, l'orifice d'entrée 28 est ouvert et l'orifice de sortie 29 est fermé. Le piston 40 est effacé du canal transversal 32.

La graisse, poussée par le piston 24 et le ressort 25 du réservoir 12, remplit entièrement les canaux 30, 31 et 32.

Dans la position représentée figure 3, on a fermé l'orifice d'entrée 28 et ouvert l'orifice de sortie 29 en alimentant le bobinage 38.

Dans la position représentée figure 4, on procède à la phase d'injection en alimentant le bobinage 41 : le piston 40 pénètre dans le canal transversal 32 poussant la graisse vers le canal 31 et de là vers la sortie 29 et vers le canal d'alimentation 6.

Enfin, dans la position représentée figure 5, on ouvre de nouveau l'entrée 28 et l'on ferme la sortie 29 en coupant le courant dans le bobinage 38.

On revient ensuite à la position de la figure 2 en cessant d'alimenter le bobinage 42, ce qui a pour effet que le ressort de rappel 43 chasse le piston 40 du canal transversal 32.

Bien entendu, au démarrage, il faut d'abord remplir entièrement les canalisations de graisse jusqu'au canal d'alimentation 6.

Il est à noter qu'il faut obturer la sortie 29 avant de repousser le piston 40 afin d'éviter un retour en arrière de la graisse à cause de la dépression provoquée par le recul du piston.

Dans le cas où la perte de charge due au mouvement de la graisse est trop important (viscosité de la graisse importante due à une basse température ambiante), on prévoit un chauffage électrique du réservoir 12 et du bloc d'injection 10.

Par ailleurs, d'autres modes de réalisation de la vanne 33 et du piston 40 peuvent être envisagés de même que leur commande qui peut être par exemple pneumatique.

## Revendications

1/ Dispositif pour l'alimentation en graisse de paliers (4, 5) d'une machine tournante (1) comportant un stator (2) et un rotor (3), comprenant des moyens (12, 10, 11) pour l'injection de graisse dans lesdits paliers, lesdits moyens étant commandés par un circuit électronique (17) de commande recevant en entrée des signaux en provenance de capteurs (18 à 21) de paramètres caractéristiques de l'état de fonctionnement des paliers, caractérisé en ce que lesdits moyens comprennent un réservoir (12) de graisse sous pression relié à des blocs d'injection (10, 11) reliés, chacun, à un canal d'alimentation (6, 7) d'un palier, lesdits capteurs étant des capteurs de pression et de température, et ledit circuit électronique (17) comportant une horloge et élaborant, en fonction d'un programme préétabli, les cycles d'injection compte tenu des informations données par lesdits capteurs et du temps de fonctionnement des paliers.

2/ Dispositif selon la revendication 1, caractérisé en ce qu un dit bloc d'injection (10, 11) comporte un orifice d'entrée (28), relié audit réservoir (12) de graisse, et un orifice de sortie (29), relié au canal d'alimentation (6, 7) d'un palier (4, 5), l'orifice d'entrée et l'orifice de sortie étant reliés par des canaux internes (30, 31, 32), ledit bloc (10) étant muni d'une vanne (33) à deux positions, dont une première position laisse libre ladite entrée (28) et obture ladite sortie (29) et dont une seconde position obture ladite entrée (28) et laisse libre ladite sortie (29), et d'un piston d'injection (40) déplaçable entre une première position dans laquelle ce piston est dégagé de toute obstruction desdits canaux internes (30, 31, 32) entre l'orifice d'entrée (28) et l'orifice de sortie (29) et une seconde position dans laquelle ledit piston (40) pénètre dans au moins une partie (32) desdits canaux.

3/ Dispositif selon la revendication 2, caractérisé en ce que ladite vanne (33), et ledit piston d'injection (40) sont actionnés chacun par un électro-aimant polarisé (38, 39-41, 42) commandé par ledit circuit électronique (17).

4/ Dispositif selon l'une des revendications 1 à 3, caractérisé en ce que chaque canal d'alimentation (6, 7) aboutit à une partie rotorique cylindrique, filetée, (8, 9) immédiatement contiguë à un palier (4, 5).

# FIG.1

# FIG.2

# FIG.3

# FIG.4

# FIG.5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A,D | US-A-4738336 (SMITH ET AL.)<br>* le document en entier *<br>--- | 1 | F16N29/02<br>F16N7/38<br>F16C33/66<br>F16C19/52 |
| A | EP-A-78420 (KEARNEY & TRECKER)<br>* page 2, lignes 24 - 33 *<br>* page 5, ligne 15 - page 6, ligne 2; figures 1, 2 *<br>--- | 1 | |
| A | US-A-4011927 (SMITH)<br>* abrégé; figures 1-3 *<br>--- | 1 | |
| A | EP-A-29736 (HITACHI)<br>* abrégé *<br>--- | 1 | |
| A | CH-A-626972 (ESCHLER)<br>* page 2, lignes 1 - 57; figures 1-5 *<br>--- | 1, 3 | |
| A | US-A-2728414 (DRISSNER)<br>* colonne 3, lignes 9 - 36; figures *<br>--- | 5 | |
| A | US-A-3674112 (ROBERTS)<br>----- | | **DOMAINES TECHNIQUES RECHERCHES (Int. Cl.5)**<br><br>F16N<br>F16C |

Le présent rapport a été établi pour toutes les revendications

| Lieu de la recherche | Date d'achèvement de la recherche | Examinateur |
|---|---|---|
| LA HAYE | 10 JUILLET 1990 | KOOIJMAN F.G.M. |

EPO FORM 1503 03.82 (P0402)